# EUROPÄISCHE PATENTSCHRIFT

(11) **EP 2 915 246 B1**
(45) Veröffentlichungstag und Bekanntmachung des Hinweises auf die Patenterteilung: **06.03.2019**
(21) Anmeldenummer: 13779592.8
(22) Anmeldetag: 21.10.2013
(51) Int. Cl.: H02P 6/08, H02H 7/085, H02P 29/032, H02P 29/024, H02P 6/14

(54) **VERFAHREN UND VORRICHTUNG ZUM BETREIBEN EINER ELEKTRONISCH KOMMUTIERTEN ELEKTRISCHEN MASCHINE**
METHOD AND DEVICE FOR OPERATING AN ELECTRONICALLY COMMUTATED ELECTRIC MACHINE
PROCÉDÉ ET DISPOSITIF POUR FAIRE FONCTIONNER UNE MACHINE ÉLECTRIQUE À COMMUTATION ÉLECTRONIQUE

(30) Priorität: 30.10.2012 DE 102012219797
(43) Veröffentlichungstag der Anmeldung: 09.09.2015
(73) Patentinhaber: Robert Bosch GmbH, 70442 Stuttgart (DE)
(72) Erfinder: EISENBLAETTER, Dirk, 76534 Baden-Baden Neuweier (DE); BERGT, Martin, 76137 Karlsruhe (DE); WILHARM, Torsten, 77815 Buehl (DE)
(86) Internationale Anmeldenummer: PCT/EP2013/071969
(87) Internationale Veröffentlichungsnummer: WO 2014/067806

(56) Entgegenhaltungen:
- EP-A2- 2 107 677
- US-A1- 2004 100 216

## Beschreibung

### Technisches Gebiet

Die vorliegende Erfindung betrifft elektronisch kommutierte elektrische Maschinen, insbesondere Maßnahmen zum Schutz einer elektronisch kommutierten elektrischen Maschine vor Überlast, insbesondere vor zu hohen Phasen- bzw. Strangströmen.

### Stand der Technik

Elektronisch kommutierte elektrische Maschinen werden häufig mithilfe eines Wechselrichters betrieben. Der Wechselrichter wird durch Vorgabe eines Kommutierungsmusters so angesteuert, dass dieser abhängig von einer Läuferlage der elektrischen Maschine Phasenanschlüsse der elektrischen Maschine bestromt oder stromlos schaltet. Darüber hinaus kann in dem Wechselrichter mithilfe einer Pulsweitenmodulation die anzulegende Phasenspannung variiert und somit eine Leistungsstellung zur variablen Ansteuerung der elektrischen Maschine durchgeführt werden.

Der Wechselrichter wird zur variablen Einstellung des Motordrehmoments bzw. des Lastmoments mithilfe einer Pulsweitenmodulation durch Vorgabe eines Tastverhältnisses eingestellt. Mithilfe der Pulsweitenmodulation wird die über zwei betreffende Phasenanschlüsse anzulegende Phasenspannung moduliert, um die effektiv anliegende Phasenspannung entsprechend dem Tastverhältnis zu reduzieren. Dazu wird ein zyklisches Ansteuermuster vorgesehen, wobei das Tastverhältnis dabei das Verhältnis einer Zeitdauer, für die die Versorgungsspannung an die Phasenanschlüsse der elektrischen Maschine angelegt ist, zu einer vorgegebenen Zykluszeitdauer angibt.

Um die elektrische Maschine und den Wechselrichter vor Schäden durch unzulässig hohe Stromstärken zu schützen, ist in der Regel eine Strombegrenzung oder eine Überstromabschaltung vorgesehen. Obwohl die schädigende Wirkung bei Überschreiten eines Stromschwellenwerts durch einen Phasenstrom in nur einer Phase auftreten kann, werden aus Kostengründen nicht die einzelnen Phasenströme überwacht, sondern der Zwischenkreisstrom als Summe der einzelnen Phasenströme.

Da die Strommessung weiterhin aufgrund einer EMV-Auslegung im Wesentlichen eine Mittelwertbildung durchführt, werden insbesondere bei kleinen Tastverhältnissen der Pulsweitenmodulation Zwischenkreisströme gemessen, die erheblich geringer sind als der tatsächliche Stromfluss durch eine gerade bestromte Phase der elektrischen Maschine. Somit kann in einigen Fällen, insbesondere bei geringen Tastverhältnissen, die Strombegrenzung bzw. Überstromabschaltung nicht eingreifen, obwohl die Phasenströme im Falle einer Schwergängigkeit oder Blockierung bereits unzulässig hoch werden können.

Ein einfaches Beaufschlagen des für die Strombegrenzung maßgeblichen Stromschwellenwerts mit dem Tastverhältnis der Pulsweitenmodulation ist häufig aufgrund der Möglichkeiten der Hardware des Steuergeräts und/oder des Wechselrichters nicht möglich. Insbesondere sind Strombegrenzer für in Brückenschaltungen verwendete Bauelemente so ausgelegt, dass sie im Allgemeinen einen festen Stromschwellenwert vorsehen, der bei Überschreiten ein Abschalten auslöst. Der Stromschwellenwert ist daher nicht ohne weiteres manipulierbar.

Die Druckschrift EP 2 107 677 A2 offenbart einen elektronisch kommutierten Elektromotor, der durch Vorgabe eines Tastverhältnisses betreiben wird. Das Tastverhältnis wird auf einen Maximalwert begrenzt.

Die Druckschrift US 2004/100216 A1 betrifft ein Verfahren zum Betreiben eines Elektromotors mithilfe einer Ansteuerung mit einem Tastverhältnis. Das Tastverhältnis wird auf ein vorgegebenes maximales Tastverhältnis begrenzt, um Stromsprünge bei Spannungsänderungen zu reduzieren.

Es ist Aufgabe der vorliegenden Erfindung, ein verbessertes Verfahren zum Betreiben einer elektrischen Maschine zur Verfügung zu stellen, mit dem es möglich ist, das Auftreten eines Überstroms in einer Phase bzw. einem Strang der elektrischen Maschine auch bei niedrigen Tastverhältnissen zu vermeiden.

### Offenbarung der Erfindung

Diese Aufgabe wird durch das Verfahren zum Betreiben einer elektronisch kommutierten elektrischen Maschine gemäß Anspruch 1 sowie durch das Computerprogramm gemäß Anspruch 3, das elektronische Speichermedium gemäß Anspruch 4, das elektronische Steuergerät gemäß Anspruch 5 und das System gemäß Anspruch 6 gelöst.

Weitere vorteilhafte Ausgestaltungen der vorliegenden Erfindung sind im abhängigen Anspruch angegeben.

Gemäß einem ersten Aspekt ist ein Verfahren zum Betreiben einer elektronisch kommutierten elektrischen Maschine vorgesehen, umfassend die folgenden Schritte:
- Ansteuern einer Treiberschaltung entsprechend einem Kommutierungsschema durch Schalten von Leistungshalbleiterschaltern;
- Anwenden einer Pulsweitenmodulation auf das Schalten der Leistungshalbleiterschalter; und
- Begrenzen eines Tastverhältnisses der Pulsweitenmodulation auf einen Tastverhältnisschwellenwert.

Weiterhin wird der Tastverhältnisschwellenwert abhängig von einer momentanen Drehzahl der elektrischen Maschine bestimmt werden.

Eine Idee des obigen Verfahrens besteht darin, das einzustellende Tastverhältnis auf einen vorgegebenen Begrenzungswert zu begrenzen. Insbesondere kann das Tastverhältnis auf einen von einer Drehzahl der elektrischen Maschine abhängigen Begrenzungswert begrenzt werden. Dies ist insbesondere bei Antrieben mit einer Lastcharakteristik sinnvoll, bei denen der Drehmomentbedarf mit der Drehzahl deutlich ansteigt, insbesondere bei denen der Drehmomentbedarf linear oder quadratisch bezüglich der Drehzahl ansteigt, wobei eine Begrenzung der Phasenspannung, d. h. eine Begrenzung der effektiven an den Phasenanschlüssen der elektrischen Maschine anliegenden Spannung, vorgenommen wird. Auf diese Weise kann im Wesentlichen unabhängig von der Höhe des vorgegebenen Tastverhältnisses eine zuverlässige Strombegrenzung realisiert werden, wobei nicht der Motorstrom sondern die anliegenden Phasenspannungen abhängig von der momentanen Drehzahl der elektrischen Maschine begrenzt werden.

Dadurch kann der Fall ausgeschlossen werden, dass bei einem niedrigen Tastverhältnis ein zu hoher Motorstrom nicht durch die Strombegrenzung oder die Überstromabschaltung erkannt wird, da die Strommessung nur einen Mittelwert oder einen geglätteten Wert des durch die elektrische Maschine fließenden Stroms liefert.

Insbesondere wird der Tastverhältnisschwellenwert gemäß einem vorgegebenen Tastverhältnisschwellenwert-Kennfeld oder einer vorgegebenen Tastverhältnisschwellenwert-Funktion bestimmt.

Weiterhin wird entweder ein Motorstrom, der sich aus einer Strombilanz von Phasenströmen an Phasenanschlüssen der elektrischen Maschine ergibt, begrenzt oder eine Überstromabschaltung bei Überschreiten eines Maximalstroms durch den Motorstrom vorgenommen.

Es kann vorgesehen sein, dass das Tastverhältnis der Pulsweitenmodulation gemäß einer vorgegebenen Ansteuerfunktion abhängig von einer Sollvorgabe bestimmt wird.

Gemäß einem weiteren Aspekt ist ein Computerprogrammprodukt vorgesehen, das einen Programmcode enthält, der, wenn er auf einer Datenverarbeitungseinrichtung ausgeführt wird, das obige Verfahren durchführt.

### Kurzbeschreibung der Zeichnungen

Bevorzugte Ausführungsformen der vorliegenden Erfindung werden nachfolgend anhand der beigefügten Zeichnungen näher erläutert. Es zeigen:
- Figur 1: eine schematische Darstellung eines Motorsystems mit einer Treiberschaltung und einer dreiphasigen elektrischen Maschine;
- Figur 2: ein Diagramm zur Darstellung von Betriebsbereichen der elektrischen Maschine; und
- Figur 3: ein Flussdiagramm zur Veranschaulichung eines Verfahrens zum Betreiben der elektrischen Maschine.

### Beschreibung von Ausführungsformen

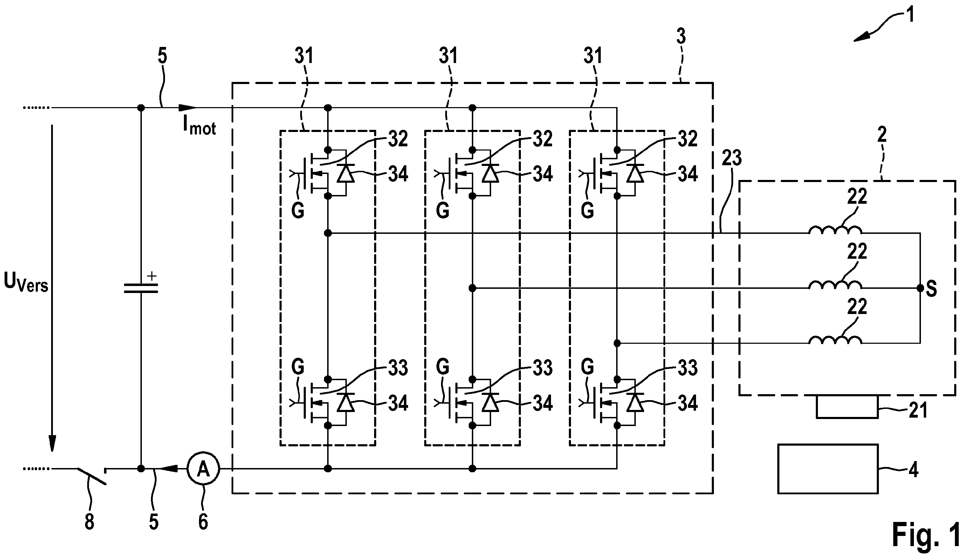

Figur 1 zeigt als Darstellung eines Motorsystems 1 ein elektrisches Schaltbild mit einer elektrischen Maschine 2, einer Treiberschaltung 3 und einer Steuereinheit 4.

Die elektrische Maschine 2 ist als elektronisch kommutierte elektrische Maschine vorgesehen, insbesondere als dreiphasige elektrische Maschine. Insbesondere kann die elektrische Maschine 2 als Synchronmaschine oder Asynchronmaschine ausgebildet sein. Die elektrische Maschine 2 ist mit einem Lagesensor 21 versehen, um eine Läuferlage der elektrischen Maschine 2 zu detektieren und eine entsprechende Information an das Steuergerät 4 bereitzustellen. Alternativ kann eine Information über die Läuferlage auch sensorlos durch Auswerten von Phasenstromverläufen ermittelt werden.

Eine Statoranordnung der elektrischen Maschine 2 weist Statorspulen 22 oder Statorspulenanordnungen auf, die in einer Sternpunktschaltung über einen gemeinsamen Sternpunkt S miteinander verschaltet sind. Die jeweils anderen Anschlüsse der Statorspulen 22 stellen die Phasenanschlüsse 23 der elektrischen Maschine 2 dar, um einen Energiefluss von und zu der elektrischen Maschine 2 zu gewährleisten. In einer alternativen Ausführungsform können die Statorspulen 22 auch in einer Dreieckschaltung verschaltet sein.

Die Treiberschaltung 3 weist im Falle der dreiphasigen elektrischen Maschine 2 im Wesentlichen eine entsprechende Anzahl von (drei) Inverterschaltungen 31 auf, die eine entsprechende Phasenansteuerung an den Phasenanschlüssen 23 der elektrischen Maschine 2 bereitstellen. Jede der Inverterschaltungen 31 weist einen ersten Leistungshalbleiterschalter 32 (Pull-up-Zweig) und einen zweiten Leistungshalbleiterschalter 33 (Pull-down-Zweig) auf, die in Reihe zueinander geschaltet sind, und über die Reihenschaltung der ersten und zweiten Leistungshalbleiterschalter 32, 33 jeder der Inverterschaltungen 31 ist über entsprechende Versorgungsspannungsleitungen 5 eine Versorgungsspannung U_{Vers} angelegt.

Die Leistungshalbleiterschalter 32, 33 können als Halbleiterbauelemente, wie beispielsweise Leistungs-MOSFETs, Thyristoren, IGBTs, IGCTs und dergleichen, ausgebildet sein. Die Leistungshalbleiterschalter 32, 33 weisen jeweils eine antiparallel geschaltete Freilaufdiode 34 auf, um einen durch eine induzierte Spannung auftretenden negativen Stromfluss ableiten zu können.

An einem Knoten zwischen dem ersten Leistungshalbleiterschalter 32 und dem zweiten Leistungshalbleiterschalter 33 jeder der Inverterschaltungen 31 ist ein Abgriff für einen jeweiligen der Phasenanschlüsse 23 vorgesehen. Jeder der Leistungshalbleiterschalter 32, 33 ist separat über seinen Steueranschluss G ansteuerbar und dazu mit der Steuereinheit 4 verbunden.

Die obige Treiberschaltung 3 wird in der Regel B6-Schaltung genannt. Alternativ sind auch andere Konfigurationen von Treiberschaltungen möglich wie beispielsweise H-Schaltungen oder dergleichen.

Die Steuereinheit 4 steuert die Leistungshalbleiterschalter 32, 33 gemäß einem Kommutierungsschema an, das angibt, zu welchem Zeitpunkt in welchem der Phasenanschlüsse 23 ein Strom in die elektrische Maschine 2 und aus welchem der Phasenanschlüsse 23 ein Strom aus der elektrischen Maschine 2 fließen soll. Eine derartige Kommutierung kann so erfolgen, dass ein erster der Leistungshalbleiterschalter 32 einer der Inverterschaltungen 31 und ein zweiter der Leistungshalbleiterschalter 33 einer weiteren der Inverterschaltungen 31 jeweils so geschaltet werden, dass diese geschlossen sind und einen niederohmigen Strompfad ausbilden, während alle übrigen Leistungshalbleiterschalter 32, 33 geöffnet und somit hochohmig sind. Durch Schalten der ersten und zweiten Leistungshalbleiterschalter 32, 33 abhängig von der durch den Lagedetektor 21 oder sensorlos ermittelten Läuferlage ist es möglich, ein Statormagnetfeld zu erzeugen, das umlaufend ist und dem Erregermagnetfeld des Läufers voreilt, um so ein Vortriebsmoment zu erzeugen.

Um das von der elektrischen Maschine 2 bereitgestellte Antriebsmoment einstellen zu können, wird zusätzlich zu dem Kommutierungsschema die effektiv während einer entsprechenden Kommutierungsphase an den Phasenanschluss 23 anzulegende Phasenspannung mithilfe einer Pulsweitenmodulation eingestellt. Dazu werden diejenigen Leistungshalbleiterschalter 32, 33, die geschlossen werden sollen, durch Vorgabe eines Tastverhältnisses pulsweitenmoduliert angesteuert, so dass die Phasenanschlüsse 23 effektiv nur mit einer reduzierten Spannung beaufschlagt sind. Das Tastverhältnis gibt das Verhältnis einer Einschaltzeitdauer des betreffenden Leistungshalbleiterschalters 32, 33 zu einer vorgegebenen Zykluszeitdauer an. Mit anderen Worten gibt das Tastverhältnis den Anteil der Einschaltzeitdauer an der gesamten Zykluszeitdauer an. Dadurch lässt sich die effektiv an die Phasenanschlüsse 23 angelegte Spannung abhängig vom Tastverhältnis linear einstellen.

In der Versorgungsspannungsleitung 5, über die die Versorgungsspannung U_{Vers} an die Treiberschaltung 3 angelegt wird, befindet sich ein Stromdetektor 6, der den gesamten der Treiberschaltung 3 bereitgestellten Motorstrom ermittelt. Der Stromdetektor 6 nimmt aufgrund seiner EMV-Auslegung eine Glättung der gemessenen Stromwerte vor, so dass stets eine Angabe zu einem geglätteten bzw. gemittelten Motorstrom bereitsteht.

Insbesondere bei niedrigen Tastverhältnissen der Pulsweitenmodulation liegt jedoch während eines Einschaltzeitfensters, dessen Dauer dem Produkt aus Tastverhältnis und der vorgegebenen Zykluszeitdauer entspricht, mit dem sich einstellenden Stromfluss die volle Versorgungsspannung U_{Vers} über zwei Phasenanschlüssen 23 an, während in dem übrigen Anteil an der Zykluszeitdauer keine Spannung anliegt und somit kein Strom fließt, da die betreffenden Leistungshalbleiterschalter 32, 33 ausgeschaltet sind. Dies kann jedoch in dem Einschaltzeitfensters der Zykluszeitdauer, in dem die Spannung an die entsprechenden Phasenanschlüsse 23 angelegt ist, zu einem hohen Stromfluss führen, der unter Umständen größer ist als ein zulässiger Phasenstrom.

Bei bisherigen Motorsystemen wird durch geeignete Maßnahmen der Motorstrom begrenzt, um Schäden von der Treiberschaltung 3 oder der elektrischen Maschine 2 abzuwenden. So kann eine Strombegrenzung oder Überstromabschaltung vorgesehen werden, indem in den Versorgungsspannungsleitungen 5 weiterhin ein Abschaltelement 8 vorgesehen ist. Bei Erkennen eines Stromwerts des Motorstroms Iₘₒₜ über einem vorgegebenen Stromschwellenwert Iₘₐₓ kann das Abschaltelement 8 gesteuert durch die Steuereinheit 4 geöffnet und somit das Motorsystem 1 abgeschaltet werden.

Wird lediglich eine Strommessung in Versorgungsspannungsleitungen 5 vorgenommen, ist es jedoch nicht möglich, einen auftretenden Stromwert in den Phasensträngen der elektrischen Maschine 2 festzustellen, der einen Stromgrenzwert für den betreffenden Phasenstrang übersteigt.

Um insbesondere in Betriebsfällen, in denen beispielsweise aufgrund des Tastverhältnisses der gemessene Motorstrom Iₘₒₜ deutlich geringer ist als der tatsächliche in der elektrischen Maschine 2 fließende Phasenstrom, ist in der Steuereinheit 4 eine weitere Maßnahme implementiert, die sicherstellt, dass die Phasenströme einen vorgegebenen Phasenstromschwellenwert nicht übersteigen. Dazu ist in der Steuereinheit 4 eine Spannungsbegrenzung implementiert.

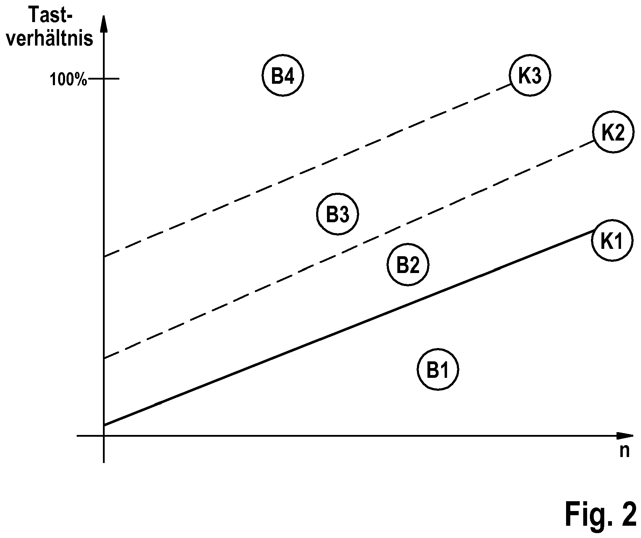

In Figur 2 ist anhand eines Diagramms das Verhalten eines beispielhaften Motorsystems in einer ausgewählten Anwendung dargestellt, wobei Tastverhältnisse T über der Drehzahl n bei normalen Betriebsbedingungen aufgetragen sind. Die Kurve K1 zeigt den Verlauf des Tastverhältnisses T abhängig von der zu erreichenden Drehzahl bei normalen Betriebsbedingungen. Bei Blockierung, Schwergängigkeit oder einer erhöhten Last wird die Steuereinheit 4 ein Tastverhältnis T auswählen, das größer ist als das durch die Kurve K1 vorgegebene Tastverhältnis. Bei geringerer Last als bei normalen Betriebsbedingungen wird das anzulegende Tastverhältnis aus einem Bereich B1 unterhalb der Kurve K1 ausgewählt.

Der mit B2 gekennzeichnete Bereich umfasst diejenigen Tastverhältnisse, die die durch die Kurve K1 bezüglich einer bestimmten Drehzahl n vorgegebenen Tastverhältnisse T übersteigen und bei denen noch keine kritischen Ströme in den Phasensträngen der elektrischen Maschine 2 auftreten.

Der Bereich B2 ist nach oben durch die Kurve K2 begrenzt. Die Kurve K2 beschreibt eine Trennlinie zu einem Bereich B3, in dem bezogen auf die Drehzahl n die Tastverhältnisse T so hoch sind, dass kritische Phasenströme auftreten können, zu deren Detektion die Strombegrenzung und die Überstromabschaltung aufgrund des glättenden Verhaltens des Stromdetektors 6 nicht in der Lage sind. Der Bereich B4 kennzeichnet den Bereich oberhalb einer Kurve K3, in dem die Strommessung durch den Stromdetektor 6 einen Überstrom feststellt und entsprechend eine Abschaltung des Motorsystems 1 durch Schalten des Schaltelements 8 bewirkt. Das Diagramm der Figur 2 stellt eine beispielhafte Anwendung dar, in der das Motorsystem 1 betrieben werden kann. In alternativen Anwendungsfällen können die in Figur 2 dargestellten linearen Kurvenverläufe der Kurven K1 und K2 auch andere, nicht lineare Verläufe aufweisen.

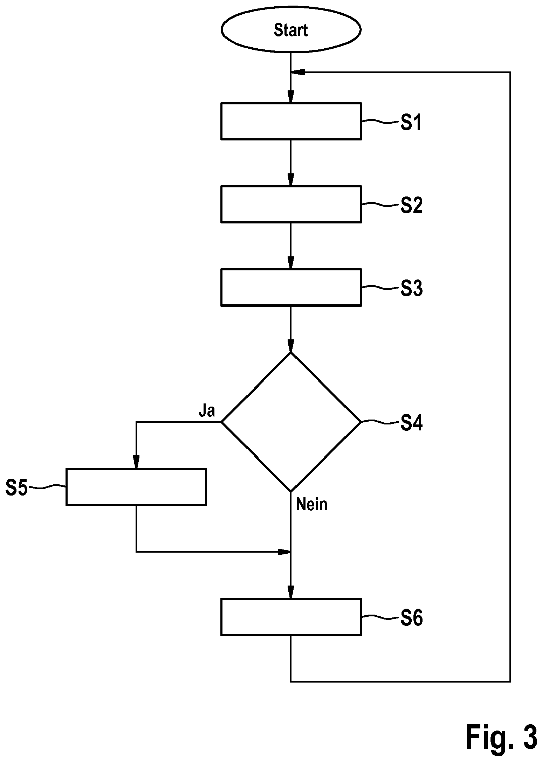

In Figur 3 ist ein Flussdiagramm zur Veranschaulichung des Verfahrens zum Betreiben des Motorsystems 1 dargestellt.

In Schritt S1 wird zunächst die momentane Drehzahl der elektrischen Maschine 2 ermittelt, insbesondere mithilfe des Lagedetektors 21 oder sensorlos. Insbesondere kann die Drehzahl n durch zeitliche Auswertung der Änderung der ermittelten Läuferlage erkannt werden.

In einem nachfolgenden Schritt S2 wird von der Steuereinheit 4 gemäß einem vorgegebenen Algorithmus ein Tastverhältnis T ermittelt, das sich entsprechend dem Anwendungsfall aus der momentanen Drehzahl n oder sonstigen externen Vorgaben und Bedingungen ergibt.

In Schritt S3 wird ein der momentanen Drehzahl n zugeordneter Tastverhältnisschwellenwert Tₜₕ ermittelt, beispielsweise aus einer Tastverhältnisschwellenwertfunktion oder einem entsprechenden Kennfeld. Die Kurve K2 gibt den Verlauf des Tastverhältnisschwellenwerts Tₜₕ für das betreffende Anwendungsbeispiel vor. Der Tastverhältnisschwellenwert Tₜₕ gibt einen Maximalwert für das Tastverhältnis an, der nicht überschritten werden darf, da ansonsten unzulässig hohe Phasenströme auftreten könnten.

In Schritt S4 wird nun überprüft, ob das in Schritt S2 ermittelte Tastverhältnis den in Schritt S3 ermittelten Tastverhältnisschwellenwert Tₜₕ übersteigt. Ist dies der Fall (Alternative: Ja), so wird das Verfahren mit Schritt S5 fortgesetzt. Andernfalls (Alternative: Nein) wird das Verfahren direkt mit Schritt S6 fortgesetzt.

In Schritt S5 wird das in Schritt S2 ermittelte Tastverhältnis T auf den Tastverhältnisschwellenwert Tₜₕ begrenzt und somit sichergestellt, dass die elektrische Maschine 2 nicht mit einem größeren Tastverhältnis T angesteuert wird als es dem Tastverhältnisschwellenwert Tₜₕ entspricht.

In dem anschließenden Schritt S6 wird die elektrische Maschine gemäß dem Tastverhältnis T bzw. dem begrenzten Tastverhältnis angesteuert.

Zusätzlich zu der Begrenzung des Tastverhältnisses T, die einer Begrenzung der an die Phasenanschlüsse 23 angelegten Phasenspannungen entspricht, kann die oben beschriebene Strombegrenzung bzw. Überstromabschaltung implementiert sein, um auch für hohe Tastverhältnisse einen Schutz gegen unerwünschte Betriebsfälle sicherzustellen, in denen unzulässig hohe Motorströme auftreten können.

## Patentansprüche

1. Verfahren zum Betreiben einer elektronisch kommutierten elektrischen Maschine (2), mit folgenden Schritten:
- Ansteuern einer Treiberschaltung (3) entsprechend einem Kommutierungsschema durch Schalten von Leistungshalbleiterschaltern (32, 33);
- Anwenden einer Pulsweitenmodulation auf das Schalten der Leistungshalbleiterschalter (32, 33); und
- Begrenzen eines Tastverhältnisses (T) der Pulsweitenmodulation auf einen Tastverhältnisschwellenwert (Tₜₕ).
**dadurch gekennzeichnet dass**, der Tastverhältnisschwellenwert (Tₜₕ) abhängig von einer momentanen Drehzahl der elektrischen Maschine (2) ermittelt wird, wobei die momentane Drehzahl der elektrischen Maschine (2) mithilfe des Lagedetektors 21 oder sensorlos ermittelt wird, wobei die Drehzahl (n) durch zeitliche Auswertung der Änderung der ermittelten Läuferlage erkannt wird,
wobei der Tastverhältnisschwellenwert (Tₜₕ) gemäß einem vorgegebenen Tastverhältnisschwellenwert-Kennfeld oder einer vorgegebenen Tastverhältnisschwellenwert-Funktion bestimmt wird, ein Motorstrom, der sich aus einer Strombilanz von Phasenströmen an Phasenanschlüssen der elektrischen Maschine (2) ergibt, begrenzt wird oder eine Überstromabschaltung bei Überschreiten eines Maximalstroms durch den Motorstrom vorgenommen wird.

2. Verfahren nach Anspruch 1, wobei das Tastverhältnis (T) der Pulsweitenmodulation gemäß einer vorgegebenen Ansteuerfunktion abhängig von einer Sollvorgabe bestimmt wird.

3. Computerprogramm, welches dazu eingerichtet ist, alle Schritte eines Verfahrens nach einem der Ansprüche 1 oder 2 auszuführen.

4. Elektronisches Speichermedium, auf welchem ein Computerprogramm nach Anspruch 3 gespeichert ist.

5. Elektronisches Steuergerät, welches ein elektronisches Speichermedium nach Anspruch 4 aufweist.

6. System umfassend:
- eine elektronisch kommutierte elektrische Maschine (2);
- eine Treiberschaltung (3) mit Leistungshalbleiterschaltern (32,33), um die elektrische Maschine (3) durch Schalten der Leistungshalbleiterschalter (32,33) anzusteuern; und
- ein elektronisches Steuergerät nach Anspruch 5, welches ausgebildet ist, um die Leistungshalbleiterschalter (32, 33) entsprechend des Kommutierungsschemas anzusteuern.

## Claims

1. Method for operating an electronically commutated electric machine (2), comprising the following steps:
- actuating a driver circuit (3) according to a commutation scheme by switching power semiconductor switches (32, 33);
- applying a pulse width modulation to the switching of the power semiconductor switches (32, 33); and
- limiting a duty cycle (T) of the pulse width modulation to a duty cycle threshold value (Tₜₕ),
**characterized in that**
the duty cycle threshold value (Tₜₕ) is identified depending on an instantaneous rotational speed of the electric machine (2),
wherein the instantaneous rotational speed of the electric machine (2) is identified with the aid of the position detector (21) or without sensors, wherein the rotational speed (n) is detected by temporal evaluation of the change in the identified rotor position,
wherein the duty cycle threshold value (Tₜₕ) is determined according to a prescribed duty cycle threshold value characteristic map or a prescribed duty cycle threshold value function, a motor current resulting from a current balance of phase currents at phase terminals of the electric machine (2) is limited or overcurrent disconnection is performed when a maximum current is exceeded by the motor current.

2. Method according to Claim 1, wherein the duty cycle (T) of the pulse width modulation is determined according to a prescribed actuation function depending on a setpoint value.

3. Computer program, which is configured to execute all the steps of a method according to either of Claims 1 and 2.

4. Electronic storage medium, on which a computer program according to Claim 3 is stored.

5. Electronic control device, which has an electronic storage medium according to Claim 4.

6. System comprising:
- an electronically commutated electric machine (2);
- a driver circuit (3) comprising power semiconductor switches (32, 33) to actuate the electric machine (3) by switching the power semiconductor switches (32, 33); and
- an electronic control device according to Claim 5, which is designed to actuate the power semiconductor switches (32, 33) according to the commutation scheme.

## Revendications

1. Procédé pour faire fonctionner une machine électrique (2) à commutation électronique, comprenant les étapes suivantes :
- excitation d'un circuit d'attaque (3) conformément à un schéma de commutation par commutation de commutateurs semiconducteurs de puissance (32, 33) ;
- application d'une modulation d'impulsions en largeur sur la commutation des commutateurs semiconducteurs de puissance (32, 33) ; et
- limitation d'un rapport cyclique (T) de la modulation d'impulsions en largeur à une valeur de seuil de rapport cyclique (Tₜₕ),
**caractérisé en ce que**
la valeur de seuil de rapport cyclique (Tₜₕ) est déterminée en fonction d'une vitesse de rotation momentanée de la machine électrique (2),
la vitesse de rotation momentanée de la machine électrique (2) étant déterminée à l'aide du détecteur de position (21) ou sans détecteur, la vitesse de rotation (n) étant reconnue par une interprétation dans le temps de la modification de la position déterminée du rotor,
la valeur de seuil de rapport cyclique (Tₜₕ) étant définie selon un diagramme caractéristique de valeur de seuil de rapport cyclique prédéfini ou une fonction de valeur de seuil de rapport cyclique prédéfinie,
un courant de moteur, qui est obtenu à partir d'un bilan de courant des courants de phase aux bornes de phase de la machine électrique (2), étant limité ou une mise hors circuit par surintensité étant effectuée en cas de dépassement d'un courant maximal par le courant de moteur.

2. Procédé selon la revendication 1, le rapport cyclique (T) de la modulation d'impulsions en largeur étant défini selon une fonction d'excitation prédéfinie en fonction d'une indication de consigne.

3. Programme informatique qui est conçu pour exécuter toutes les étapes d'un procédé selon l'une des revendications 1 ou 2.

4. Support d'enregistrement électronique sur lequel est enregistré un programme informatique selon la revendication 3.

5. Contrôleur électronique qui possède un support d'enregistrement électronique selon la revendication 4.

6. Système, comportant :
- une machine électrique (2) à commutation électronique ;
- un circuit d'attaque (3) comprenant des commutateurs semiconducteurs de puissance (32, 33) pour exciter la machine électrique (3) par commutation des commutateurs semiconducteurs de puissance (32, 33) ; et
- un contrôleur électronique selon la revendication 5, qui est configuré pour exciter les commutateurs semiconducteurs de puissance (32, 33) conformément au schéma de commutation.
